Europäisches Patentamt

European Patent Office

Office européen des brevets

(19)

(11) Numéro de publication: **0 498 876 B1**

# FASCICULE DE BREVET EUROPEEN

(45) Date de publication de fascicule du brevet: **14.12.94**

(51) Int. Cl.⁵: **E21B 47/00**, G01P 7/00, G01P 3/44

(21) Numéro de dépôt: **91916343.6**

(22) Date de dépôt: **30.08.91**

(86) Numéro de dépôt internationale :
**PCT/FR91/00699**

(87) Numéro de publication internationale :
**WO 92/04527 (19.03.92 92/07)**

(54) **PROCEDE DE DETERMINATION DE LA VITESSE DE ROTATION D'UN OUTIL DE FORAGE.**

(30) Priorité: **04.09.90 FR 9010971**

(43) Date de publication de la demande:
**19.08.92 Bulletin 92/34**

(45) Mention de la délivrance du brevet:
**14.12.94 Bulletin 94/50**

(84) Etats contractants désignés:
**AT BE CH DE DK ES FR GB GR IT LI LU NL SE**

(56) Documents cités:
**EP-A- 0 377 235**
**FR-A- 2 314 500**
**US-A- 2 985 829**
**US-A- 3 693 460**

(73) Titulaire: **ELF AOUITAINE PRODUCTION**
**Tour Elf**
**2 Place de la Coupole**
**La Défense 6**
**F-92400 Courbevoie (FR)**

(72) Inventeur: **DRAOUI, Elyes**
**25, avenue du 18ème-R.I.**
**F-64000 Pau (FR)**

(74) Mandataire: **Timoney, Ian Charles Craig**
**Elf Aquitaine Production**
**Département Propriété Industrielle**
**Tour Elf**
**Cédex 45**
**F-92078 Paris La Défénse (FR)**

**Description**

La présente invention se rapporte à un procédé de détermination de la vitesse de rotation d'un outil de forage et, plus particulièrement, à un tel procédé destiné à déterminer cette vitesse en temps réel à partir de données captées en un point de la garniture.

Lors du forage d'un puits pétrolier, le moteur du train de tiges, qui est monté à la surface, tourne à une vitesse constante entre 50 et 150 tours/minute. Cependant, la friction produite entre l'outil de forage et le fond du puits, ou entre les tiges et la paroi du puits, peut provoquer des ralentissements voire même des arrêts périodiques de l'outil. Comme pendant ce temps, le moteur continue à tourner à une extrémité du train de tiges, ce dernier à tendance à se tordre autour de son axe longitudinal jusqu'à ce que la force exercée soit supérieure à l'effet de friction freinant l'outil. A ce moment là, le train de tiges se détend et l'outil se remet à tourner et peut atteindre des vitesses de rotation de pointe de l'ordre de 150 à 400 tours/minute. Comme les puits suivent souvent des trajectoires déviés, le contact entre la garniture et la paroi du puits se produit assez fréquemment.

Il est évident que le comportement de l'outil a un effet important sur l'avancement du forage. Ainsi, il est souhaitable que le maître foreur soit averti des instabilités de vitesse de rotation périodiques de l'outil afin qu'il puisse modifier les paramètres du forage - vitesse de rotation du moteur, débit de boue, ou poids appliqué sur l'outil - et ainsi assurer une foration optimale.

La présente invention a donc pour objet un procédé de détermination de la vitesse de rotation d'un outil de forage susceptible d'être effectué en temps réel à partir de données captées en un point de la garniture.

Pour ce faire, l'invention propose un procédé de détermination de la vitesse de rotation d'un outil de forage, l'outil étant disposé à une extrémité d'une garniture de forage, l'autre extrémité de la garniture étant mise en rotation, caractérisé en ce que le procédé comporte les étapes suivantes :
- mesure de l'accélération axiale en un point de la garniture,
- traitement de cette mesure pour déterminer le contenu énergétique de l'accélération,
- application à cette valeur énergétique d'une correction pour déterminer ainsi la vitesse de rotation.

D'autres caractéristiques et avantages de la présente invention apparaîtront plus clairement à la lecture de la description ci-après faite en référence aux dessins annexés, sur lesquels :
- la figure 1 est une vue schématique en coupe d'un ensemble de forage,
- les figures 2 et 3 représentent, synoptiquement, les étapes du procédé selon la présente invention.

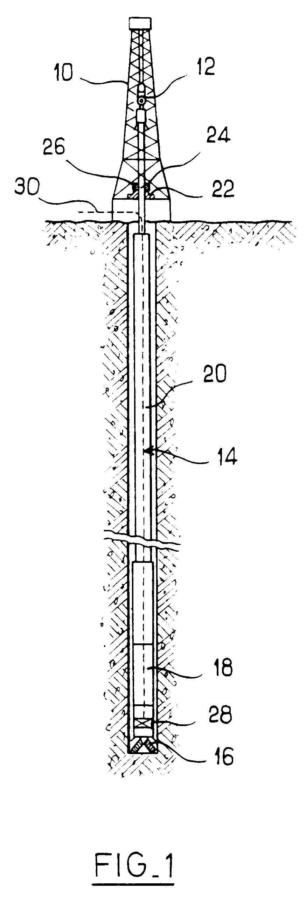

Comme représenté sur la figure 1, un ensemble de forage comprend un mât 10 muni, de façon connue en soi, d'un crochet 12 auquel est suspendu un train de tiges, représenté genéralement en 14. Le train de tiges 14 comprend un outil de forage 16, des masse-tiges 18 et des tiges de forage 20 formant un ensemble appelé garniture de forage. Dans l'exemple illustré, le train de tiges 14 est mis en rotation par une table rotative 22. Le train de tiges 14 est muni d'un accéléromètre 24 ainsi que d'un capteur 26 de vitesse de rotation.

Dans un premier mode de réalisation de l'invention, on détermine la vitesse de rotation de l'outil 16 à partir de l'accélération de l'outil qui est mesurée au fond du puits. Il faut rappeler que les dispositifs de mesure de la vitesse de rotation de l'outil, destinés à être installés adjacents aux masse-tiges 18, sont très complexes et encombrants, tandis qu'un accéléromètre est généralement de construction et de fonctionnement simples. Ainsi, selon ce premier mode de réalisation, un accéléromètre 28 est monté adjacent aux masse-tiges 18 et comprend une voie 30 de transmission des données vers la surface.

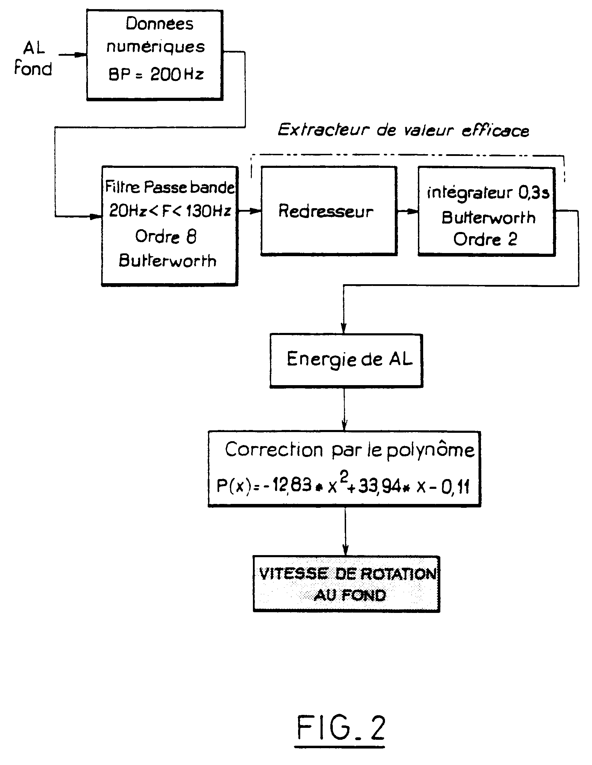

Une fois que les données représentant l'accélération axiale de l'outil 16 sont arrivées à la surface, il est nécessaire de les traiter afin de déterminer la vitesse de rotation de l'outil. Sur la figure 2 sont représentées les étapes du traitement des données.

Dans une première étape, les données d'accélération axiale sont filtrées afin de ne laisser que les fréquences se trouvant entre 20 et 130 Hz. Les données passent ensuite par un redresseur et un intégrateur afin de pouvoir déterminer l'énergie de l'accélération axiale. La valeur de l'énergie d'accélération axiale est ensuite corrigée en appliquant le polynôme suivant afin de pouvoir déterminer la vitesse de rotation au fond.

$$P(X) = -12,83 * X \gg + 33,94 * X - 0,11$$

Ainsi, à partir des accélérations axiales de l'outil mesurées au fond du puits, on peut, selon l'invention, en déduire la vitesse de rotation de l'outil.

Néanmoins, la présente invention permet, dans un deuxième mode de réalisation, de déterminer la vitesse de rotation de l'outil à partir de mesures de l'accélération axiale de la garniture prises à la surface

2

Le traitement des mesures prises à partir des accélérations axiales de la garniture à la surface nécessite la connaissance du facteur d'atténuation de l'énergie de vibration axiale dans la garniture entre l'outil et la surface. Les données du problème sont les suivantes :

```
                           Y?      POL
     POL(X) = a * X» + b * X + c      As ---> Af ---> Vf

        (1) HYPOTHESE : Y  amplificateur

        (2) CONTRAINTE : moyenne (Vs) = moyenne (Vf)

        (3) INCONNUE : Coefficient Y

        (4) Y x As = Af

        (5) POL (Af) = Vf
```

Notations :

Vf :     vitesse de rotation en fond
Vs :     vitesse de rotation en surface
As :     énergie de l'accélération axiale en surface
Af :     énergie de l'accélération axiale au fond.
La résolution du problème s'effectue comme suit :

### EQUATIONS

```
     (5) ---> a * Af» + b * Af + c = Vf

     (4) ---> Y * As = Af

     (2) ---> moy (Vs) = moy (Vf)
```

### RESOLUTION

```
     (5) ---> moy (a * Af» + b * Af + c) = moy (Vf)    (5)'

              a*moy(As)»*Y»+b*moy(As)*Y+c=moy(Vs)

     (5)' + (4) + (2)

              Equation du second degré en Y.
```

Résolution de l'équation pour obtenir le coefficient d'amplification : une seule des deux solutions est valable physiquement.

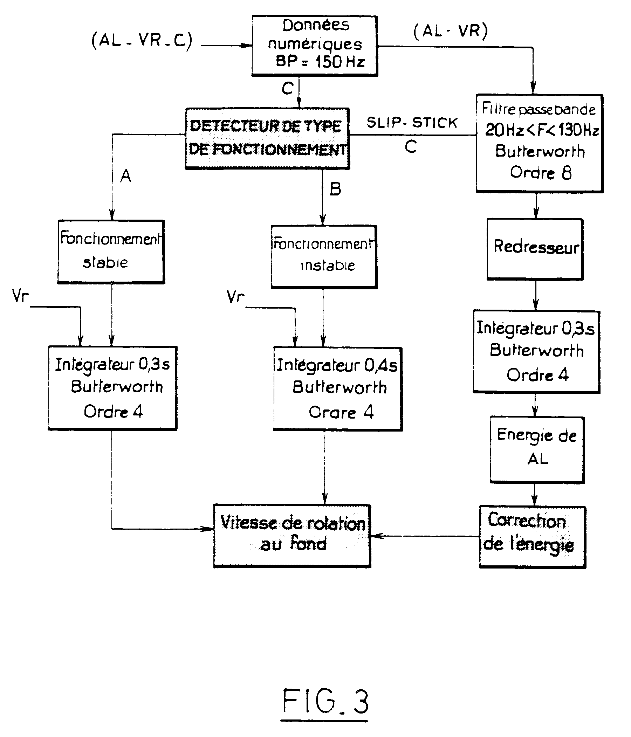

Sur la figure 3 sont représentées les diverses étapes du traitement des données.

Dans un premier temps, il convient de déterminer le type de fonctionnement de l'outil. Il y a trois cas possibles. Soit l'outil 16 tourne librement à une vitesse analogue à celle de la table rotative 22, situation appelée fonctionnement stable. Dans un deuxième cas, la friction entre l'outil et le fond du puits, ou entre la garniture et la paroi interne du puits peut provoquer, de façon connue, des ralentissements irréguliers de la rotation de l'outil. Cette situation est appelée fonctionnement instable. Dans le dernier cas, la garniture subit des instabilités périodiques de rotation, plus communément appelé "Stick Slip". Ces trois types de fonctionnement sont représentés par les voies A, B et C respectivement sur la figure 3;

Dans le cas des instabilités périodiques de rotation, voie C, le traitement initial des données est sensiblement analogue à celui du premier mode de réalisation. Comme la mesure s'effectue en un point éloigné du fond, il est nécessaire d'appliquer un coefficient multiplicateur, fonction de la position du point, afin de ramener les données du contenu énergétique à la valeur de celles prises au fond du puits.

**Revendications**

1. Procédé de détermination de la vitesse de rotation d'un outil de forage, l'outil étant disposé à une extrémité d'une garniture de forage, l'autre extrémité de la garniture étant mise en rotation, le procédé comportant les étapes suivantes :
   - mesure de l'accélération axiale en un point de la garniture,
   - traitement de cette mesure pour déterminer le contenu énergétique de l'accélération,
   - application à cette valeur énergétique d'une correction pour déterminer ainsi la vitesse de rotation caractérisé en ce que l'on mesure l'accélération axiale en un point quelconque de la garniture éloigné de l'outil, le procédé comportant l'étape additionnelle d'application d'un coefficient multiplicateur fonction de la position du point par rapport au fond afin de ramener le contenu énergétique à l'énergie d'accélération du fond.

2. Procédé selon la revendication 1 caractérisé en ce que l'on mesure l'accélération axiale à l'extrémité supérieure de la garniture, le procédé comportant l'étape additionnelle de détection du type de fonctionnement de la garniture.

**Claims**

1. Process for determining the rotational speed of a drilling tool, the tool being disposed at one end of a boring fitting, the other end of the fitting being brought into rotation, the process comprising the following stages:
   - measurement of the axial acceleration at one point on the equipment;
   - processing this measurement to establish the energy content of the acceleration;
   - applying a correction to this energetic value in order to establish the rotational speed,
   characterised in that the axial acceleration is measured at any point on the equipment remote from the tool, the process comprising the additional step of applying a multiplication coefficient which is a function of the position of the point in relation to the base in order to obtain the energetic content of the acceleration energy of the base.

2. Process according to Claim 1,
   characterised in that the axial acceleration is measured at the upper end of the fitting, the process comprising the additional stage of detecting the type of operation of the equipment.

**Patentansprüche**

1. Verfahren zum Erfassen der Drehzahl eines Bohrwerkzeugs, wobei das Werkzeug am einen Ende eines Bohrgestänges angeordnet ist und das andere Ende in Drehung versetzt wird, wobei das Verfahren die folgenden Schritte aufweist:
   - Messen der Axialbeschleunigung an einem Punkt des Bohrgestänges,
   - Verarbeiten des Meßergebnisses dieser Messung zum Bestimmen des Energiegehaltes der Beschleunigung,
   - Anwenden einer Korrektur auf diesen Energiewert, um so die Drehzahl zu bestimmen,
   dadurch **gekennzeichnet**, daß die Axialbeschleunigung entfernt vom Werkzeug an einem beliebigen Punkt des Gestänges gemessen wird, wobei das Verfahren den zusätzlichen Schritt umfaßt, bei dem ein Multiplikationskoeffizient angewendet wird, der von der Lage des Punkts im Verhältnis zum unteren Ende abhängt, um aus dem Energiegehalt die am unteren Ende auftretende Beschleunigungsenergie abzuleiten.

2. Verfahren nach Anspruch 1, dadurch gekennzeichnet, daß die Axialbeschleunigung am oberen Ende des Bohrgestänges gemessen wird, wobei das Verfahren den zusätzlichen Schritt umfaßt, bei dem die Betriebsart des Bohrgestänges festgestellt wird.

FIG_1

FIG. 2

FIG. 3